# EUROPEAN PATENT SPECIFICATION

(11) **EP 3 879 869 B1**
(45) Date of publication and mention of the grant of the patent: **21.08.2024**
(21) Application number: 18939705.2
(22) Date of filing: 09.11.2018
(51) Int. Cl.: H04W 72/04, H04W 16/26, H04W 92/20

(54) **WIRELESS NODE AND WIRELESS COMMUNICATION METHOD**
DRAHTLOSKNOTEN UND DRAHTLOSKOMMUNIKATIONSVERFAHREN
NOEUD SANS FIL ET PROCÉDÉ DE COMMUNICATION SANS FIL

(43) Date of publication of application: 15.09.2021
(73) Proprietor: NTT DOCOMO, INC., Chiyoda-ku Tokyo 100-6150 (JP)
(72) Inventor: HARADA, Hiroki, Tokyo 100-6150 (JP); TAKEDA, Kazuaki, Tokyo 100-6150 (JP)
(74) Representative: Hoffmann Eitle
(86) International application number: PCT/JP2018/041766
(87) International publication number: WO 2020/095459

(56) References cited:
- HUAWEI ET AL: "On resource coordination and dynamic scheduling in IAB", 3 November 2018 (2018-11-03), pages 1 - 5, XP051478357, Retrieved from the Internet <URL:http://www.3gpp.org/ftp/tsg%5Fran/WG1%5FRL1/TSGR1%5F95/Docs/R1%2D1812201%2Ezip> [retrieved on 20181103]
- HUAWEI ET AL: "Physical layer design for NR IAB", vol. RAN WG1, no. Chengdu, China; 20181008 - 20181012, 29 September 2018 (2018-09-29), XP051517545, Retrieved from the Internet <URL:http://www.3gpp.org/ftp/tsg%5Fran/WG1%5FRL1/TSGR1%5F94b/Docs/R1%2D1810130%2Ezip> [retrieved on 20180929]
- INTEL CORPORATION: "PHY layer enhancements for NR IAB", vol. RAN WG1, 29 September 2018 (2018-09-29), pages 1 - 13, XP051518175, Retrieved from the Internet <URL:http://www.3gpp.org/ftp/tsg%5Fran/WG1%5FRL1/TSGR1%5F94b/Docs/R1%2D1810770%2Ezip> [retrieved on 20180929]
- HUAWEI ET AL.: "On resource coordination and dynamic scheduling in IAB", 3GPP TSG RAN WG1 MEETING #95 RL-1812201, 3 November 2018 (2018-11-03), XP051478357
- ERICSSON: "IAB resource allocation and multiplexing", 3GPP TSG-RAN WG1 MEETING #95 RL- 1813566, 2 November 2018 (2018-11-02), XP051479904
- NOKIA ET AL.: "Resource allocation/coordination between parent BH and child links", 3GPP TSG RAN WG1 MEETING #95 RL- 1812702, 2 November 2018 (2018-11-02), XP051478946
- "PHY layer enhancements for NR IAB", 3GPP TSG RAN WG1 #95 RL-1812486, 3 November 2018 (2018-11-03), XP051478715

## Description

### Technical Field

The present invention relates to an IAB radio node and an IAB radio communication method.

### Background Art

In the Universal Mobile Telecommunication System (UMTS) network, Long Term Evolution (LTE) is specified for the purpose of higher speed data rate and low latency, and the like. Furthermore, a system that is a successor to LTE has also been under study for the purpose of broader bandwidth and higher speed than in LTE. Examples of the system that is a successor to LTE include LTE-Advanced (LTE-A), Future Radio Access (FRA), 5th generation mobile communication system (5G), 5G plus (5G+), Radio Access Technology (New-RAT), New Radio (NR), and the like.

Regarding a future radio communication system (for example, 5G), an Integrated Access and Backhaul (IAB) technology that integrates an access link and a backhaul link is considered (NPL 1). In the IAB, a radio node like an IAB node not only forms a radio access link along with a user terminal (User Equipment (UE)), but also forms a radio backhaul link along with any other IAB node and/or a radio base station.

HUAWEI ET AL: "On resource coordination and dynamic scheduling in IAB", 3GPP DRAFT; R1-1812201, 3RD GENERATION PARTNERSHIP PROJECT (3GPP), 3 November 2018 (2018-11-03), pages 1-5, relates to resource coordination and dynamic scheduling in IAB. A proposal for determining the slot format for each slot in a number of continuous slots is disclosed. Dynamic resource coordination between the MT and DU should be supported by either introducing additional L1 signaling to indicate the usage of configured candidate time resources for MT, or reusing Rel-15 dynamic scheduling mechanism.

HUAWEI ET AL: "Physical layer design for NR IAB", 3GPP DRAFT; R1-1810130, 3RD GENERATION PARTNERSHIP PROJECT (3GPP), RAN WG1, no. Chengdu, China; 20181008 - 20181012 29 September 2018 (2018-09-29), relates to physical layer design for NR IAB. Dynamic resource sharing between MT and DU is supported, wherein either additional L1 signaling or Rel-15 scheduling mechanism is used. For both options, the DU can be configured as flexible in the overlapping slot/symbols, wherein the non-overlapping slots/symbols can be configured as normal slot format.

INTEL CORPORATION: "PHY layer enhancements for NR IAB", 3GPP DRAFT; R1-1810770, 3RD GENERATION PARTNERSHIP PROJECT (3GPP), RAN WG1 29 September 2018 (2018-09-29), pages 1-13, relates to PHY layer enhancements for NR IAB. Rel-15 NR design allows semi-static time-domain resource allocation and dynamic time-domain resource allocation for an IAB node or a UE. For the dynamic time-domain resource allocation for the IAB node or the UE, higher layer signaling is used to coordinate the slot formation combinations in adjacent hops to fulfil half-duplex constraints.

### Citation List

### Non-Patent Literature

NPL 1
   3GPP TR 38.874 V0.6.0, "3rd Generation Partnership Project; Technical Specification Group Radio Access Network; Study on Integrated Access and Backhaul; (Release 15)," November 2018
NPL 2
   3GPP TSG RAN Meeting #78 RP-172290 "Study on Integrated Access and Backhaul for NR," December 2017

### Summary of Invention

### Technical Problem

However, a resource configuration between radio nodes and a user terminal, and between a radio node and the user terminal has not been sufficiently considered, and is required to be further considered.

An object of an aspect of the present disclosure is to provide an IAB radio node and an IAB radio communication method that are capable of suitably performing a resource configuration between radio nodes and a user terminal and between a radio node and the user terminal.

### Solution to Problem

The present invention is defined in the appended independent claims. Further preferred embodiments are defined in the dependent claims.

A radio node according to one aspect of the present disclosure includes: a reception section that receives first configuration information relating to a first radio backhaul link and second configuration information relating to at least one of a second radio backhaul link and a radio access link; and a control section that controls a first resource configuration for the first radio backhaul link and a second resource configuration for at least one of the second radio backhaul link and the radio access link, based on the first configuration information and the second configuration information.

### Advantageous Effects of Invention

According to the present disclosure, a resource configuration between radio nodes and a user terminal and a radio node and the user terminal can be suitably performed.

### Brief Description of Drawings

FIG. 1 is a diagram illustrating an example of a configuration of a radio communication system according to an aspect of the present disclosure;
FIG. 2 is a diagram illustrating an example of a configuration of an IAB node according to an aspect of the present disclosure;
FIG. 3 is a diagram illustrating a case of Time Division Multiplexing (TDM) that is supported by the IAB node according to the aspect of the present disclosure;
FIG. 4 is a diagram illustrating a first example of transmission and reception timings of the IAB node according to the aspect of the present disclosure;
FIG. 5 is a diagram illustrating an example of transmission in a for-Mobile-Terminal (MT) configuration and a for-Distributed Unit (DU) configuration according to an aspect of the present disclosure;
FIG. 6 is a diagram illustrating a second example of the transmission and reception timings of the IAB node according to the aspect of the present disclosure;
FIG. 7 is a diagram illustrating a third example of the transmission and reception timings of the IAB node according to the aspect of the present disclosure; and
FIG. 8 is a diagram illustrating an example of a hardware configuration of the IAB node and a user terminal according to an aspect of the present disclosure.

### Description of Embodiments

An embodiment of according to an aspect of the present disclosure below will be described below with reference to the drawings.

### <Radio Communication System>

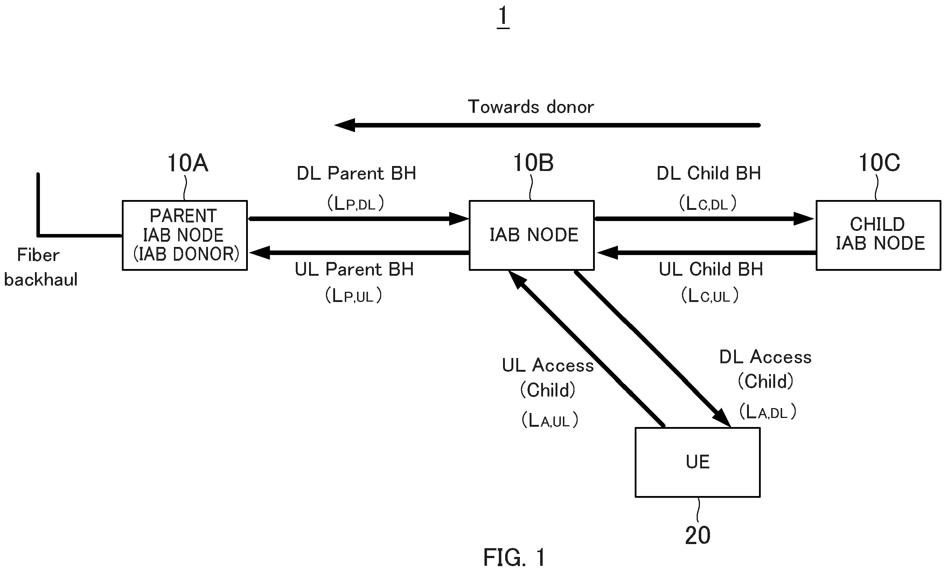

FIG. 1 illustrates an example of a configuration of a radio communication system according to an embodiment.

Radio communication system 1 includes multiple IAB nodes 10A to 10C that are an example of a radio node, and UE 20 that is an example of a user terminal. In a case where IAB nodes 10A to 10C are not distinguished from each other in the following description, in some cases, only a common number in reference character is used such as "IAB node 10".

Each of IAB nodes 10A to 10C is connected to any other IAB node 10 through radio communication. In FIG. 1, IAB node 10B is connected to IAB node 10A. IAB node 10C is connected to IAB node 10B. IAB node 10B that is in the upstream direction (more precisely, in a direction close to IAB node) when viewed from IAB node 10B is hereinafter referred to as parent IAB node 10A and IAB node 10C that is in the downstream direction (more precisely, in a direction far from IAB node) when viewed from IAB node 10B is hereinafter referred to as child IAB node 10C.

It is noted that the term "parent IAB node 10A" means a parent IAB node that has a parent relationship with IAB node 10B, and the term "child IAB node 10C" means a child IAB node that has a child relationship with IAB node 10B. In other words, IAB node 10B is equivalent to the child IAB node that has a child relationship with "parent IAB node 10A", and is equivalent to the parent IAB node that has a parent relationship with "child IAB node 10C".

Each of IAB nodes 10A to 10C forms a cell that is an area where radio communication is possible. That is, IAB node 10 functions as a base station. UE 20 within a cell can make a radio connection to IAB node 10 that form the cell.

Furthermore, IAB node 10A may make a connection to a core network (CN) through a Fiber Backhaul (BH). In this case, IAB node 10A may be referred to an IAB donor. Furthermore, in FIG. 1, the number of IAB nodes 10 is 3 and the number of pieces of UE 20 is 1. However, there may be no limit on the numbers of IAB nodes 10 and pieces of UE 20 that are included in radio communication system 1. Furthermore, the number of parent IAB nodes that have a parent relationship with IAB node 10 may be equal to or greater than 2, and the number of child IAB nodes that have a child relationship with one IAB node 10 may be equal to or greater than 2.

It is noted that the letter L and a subscript on the letter L that is illustrated in FIG. 1 indicates the following.
- L_{P, DL} indicates a downlink (DL) from parent IAB node 10A that has a parent relationship with IAB node 10B.
- L_{P, UL} indicates an uplink (UL) from IAB node 10B to parent IAB node 10A.
- L_{C, DL} indicates a DL from IAB node 10B to child IAB node 10C.
- L_{C, UL} indicates a UL from child IAB node 10C that has a child relationship with IAB node 10B.
- L_{A, DL} indicates a DL from IAB node 10B to UE 20.
- L_{A, UL} indicates a UL from UE 20 to IAB node 10B.

### <IAB node>

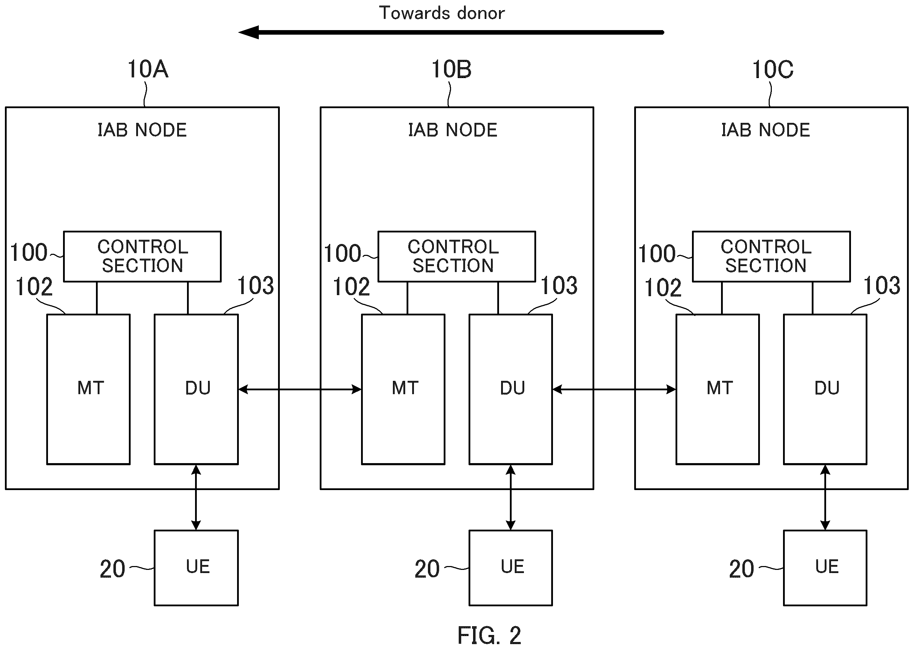

FIG. 2 illustrates an example of a configuration IAB node 10.

As illustrated in FIG. 2, IAB node 10 has control section 100, Mobile-Termination (TM) 102, and Distributed Unit (DU) 103. It is noted that MT 102 and DU 103 may be functional blocks. In a case where a function of MT 102 is expressed, in some cases, MT 102 is hereinafter expressed without the reference numeral, such as MT. In a case where a function of DU 103 is expressed, in some cases, DU 103 is hereinafter expressed without the reference numeral, such as DU. Furthermore, DU 103 may have a function that is equivalent to a base station or a satellite station. Furthermore, an example of MT 102 may have a function that is equivalent to a terminal.

With MT 102, IAB node 10B makes a connection to upstream IAB node (or IAB donor) 10A. That is, MT 102 of IAB node 10B processes a connection to parent IAB node 10A.

With DU 103, IAB node 10B makes a connection to UE 20 and the MT of downstream IAB node 10C. That is, DU 103 of IAB node 10B processes a connection to UE 20 and child IAB node 10C. The connection to UE 20 and/or child IAB node 10C with DU 103, for example, is establishment of a Radio Resource Control (RRC) channel.

Control section 100 controls MT 102 and DU 103. It is noted that operation of IAB node 10 that will be described below may be realized by control section 100 controlling MT 102 and DU 103. Furthermore, control section 100 may include a storage section for storing various pieces of information.

### <Consideration>

Parent IAB node 10A indicates a next time resource for a link (hereinafter referred to "parent link") to parent IAB node 10A from the perspective of MT 102 of IAB node 10B.
- DL time resource (a time resource that is used for the DL)
- UL time resource (a time resource that is used for the UL)
- Flexible time resource (a time resource that is used for the DL or the UL)

IAB node 10B has the following types of time resource for a link between IAB node 10B and child IAB node 10C and/or a link between IAB node 10B and UE 20 (these links are hereinafter referred to as "child links") from the perspective of DU 103 of IAB node 10B.
- DL time resource
- UL time resource
- Flexible time resource
- Not-available time resource (a resource that is not used for communication through a child link to the DU)

Each of the DL and the UL, which are the child link to the DU, and the flexible resource belongs to one of the following two categories.
- Hard: the time resource that corresponds to this can be always used for the child link to the DU.
- Soft: the availability for the child link to the DU of the time resource that corresponds to this is controlled by parent IAB node 10A explicitly and/or implicitly.

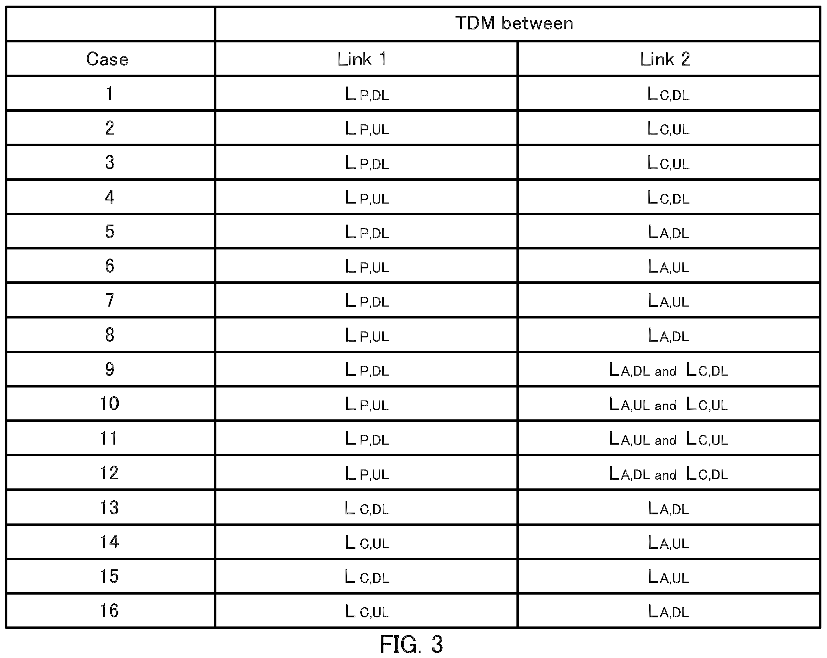

FIG. 3 is a diagram illustrating a case of TDM that is supported by IAB node 10.

In FIG. 3, link 1 indicates a parent link and link 2 indicates a child link. For example, case 1 in FIG. 3 indicates that Time Division Multiplexing for L_{P, DL} and L_{C, DL} is supported in one time resource for TDM.

Time resources specific to the IAB node, which is available for links that are illustrated in at least cases 1 to 12 in FIG. 3 are configured for IAB node 10.

Furthermore, in the Third Generation Partnership Project (3GPP), a mechanism for scheduling adjustment across IAN node 10 and the IAB donor, resource allocation, and route selection, and multiple backhaul hops are considered. Then, in the 3GPP, it is considered that a quasi-static configuration in communication signaling is supported for adjustment of a resource (from the perspective of a frequency and of a slot or a slot format, and the like) between IAB nodes 10.

A resource that is used from the perspective of the MT is configured and controlled by parent IAB node 10A. Furthermore, a resource that is used from the perspective of the DU is configured and controlled, by IAB node 10B, for child IAB node 10C and UE 20.

For example, in order to avoid an influence on UE 20 in a Time Division Duplex (TDD) band at transmission and reception timings of IAB node 10B, in a case where management that arranges downlink transmission timings in order between IAB nodes 10 is considered, there is a likelihood that the following will take place. That is, there is a likelihood that IAB node 10B will not be able to perform transmission of a UL signal to parent IAB node 10A while performing transmission of a DL signal to UE 20 and/or child IAB node 10C. Furthermore, there is a likelihood that IAB node 10B will not be able to receive a UL signal from UE 20 and/or child IAB node 10C, while performing reception of a DL signal from parent IAB node 10A.

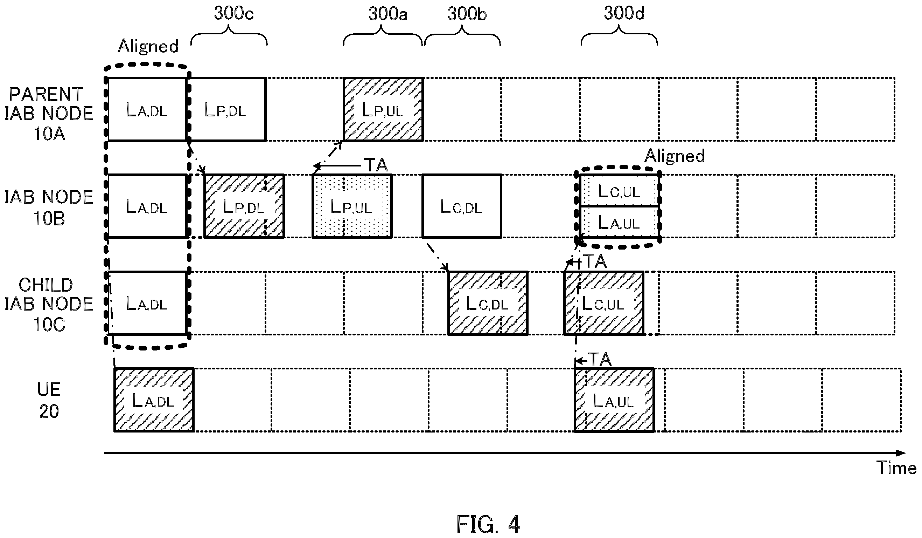

This will be described with reference to FIG. 4. FIG. 4 is a diagram illustrating an example of a transmission or reception timing of a signal that is transmitted or received between IAB nodes 10. It is noted that, in some cases, in the following description, for example, a signal that is transmitted or received via a L_{P}, _{DL} link is expressed as a L_{P, DL} signal. In the following description, in some cases, the same is also true for a signal that is transmitted or received via any other link.

Typically, transmission timings (a time resource with every periodicity) of the DL signal are arranged in order between IAB nodes 10. Furthermore, in IAB node 10B, a transmission timing of the UL signal to parent IAB node 10A is provided from parent IAB node 10A to IAB node 10B. For example, reception timing of the UL signal in parent IAB node 10A is controlled in such a manner as to fit in with the transmission timing of the DL signal in parent IAB node 10A. In this case, the transmission timing of the UL signal in IAB node 10B is configured in such a manner that the reception timing of the UL signal in the parent IAB node 10A fit in with the transmission timing of the DL signal in parent IAB node 10A.

As is the case with the example of IAB node 10B described above, the transmission timing of the UL signal to IAB node 10B in child IAB node 10C is provided from IAB node 10B to IAB node 10C.

For example, in FIG. 4, parent IAB node 10A, transmission timing 300c of the L_{P, DL} signal and reception timing 300a of an L_{P, UL} signal are arranged in order at a fixed interval. Parent IAB node 10A notifies IAB node 10B of transmission timing of the L_{P UL} signal in such a manner that the L_{P, UL} signal is received in reception timing 300a. IAB node 10B transmits the L_{P, UL} signal Timing Advance (TA) earlier in such a manner that parent IAB node 10A can receive the L_{P, UL} signal at reception timing 300a. Furthermore, IAB node 10B transmits an L_{C, DL} signal to child IAB node 10C at transmission timing 300b of the DL signal, which results from the in-order arrangement between IAB node 10A, 10B, and 10C. It is noted that the "TA" is an example of information that is used for control that advances a transmission timing of a signal and that the "TA" may be replaced with a term that is different from the "TA".

More precisely, in a certain IAB node 10, the transmission timing of the UL signal that is equivalent to signal transmission to the upstream side is configured in a manner that coincides with the reception timing of the UL signal in IAB node 10 on the upstream side. In a case where, in IAB node 10B, a transmission timing of the L_{C, DL} signal to the child IAB node and the transmission timing of the L_{P, UL} signal to parent IAB node 10A are not individually configured (adjusted), there is a likelihood that the transmission of the L_{P, UL} signal to parent IAB node 10A will not be able to be performed while transmission of the L_{C, DL} signal to child IAB node 10C is performed. The same is also true for transmission of L_{A, DL} signal to UE 20.

Furthermore, for example, in FIG. 4, IAB node 10B receives the L_{P, DL} signal that is transmitted by parent IAB node 10A at transmission timing 300c, later than at transmission timing 300c, due to propagation delay. On the other hand, IAB node 10B receives an L_{P, DL} signal and an L_{C, UL} signal that are transmitted by UE 20 and child IAB node 10C the TA earlier than transmission timing 300d, at transmission timing 300d.

More precisely, a time lag occurs between a certain IAB node 10, a reception timing of the DL signal that is equivalent to signal reception from the upstream side and the transmission timing of the DL signal in an IAB node on the upstream side. At this point, IAB node 10B cannot individually configure a reception timing of the L_{P, DL} signal from parent IAB node 10A and a reception timing of the L_{C, UL} signal from child IAB node 10C. Because of this, there is a likelihood that the time lag will not be able to be reduced to zero. For this reason, there is a likelihood that the reception of the L_{C, UL} signal from child IAB node 10C will not be able to be performed while reception of the L_{P, DL} from parent IAB node 10A is performed. The same is also true for reception of the L_{P, DL} signal from UE 20.

Furthermore, when IAB node 10B uses a portion of DL resource that is configured from the perspective of the MT from parent IAB node 10A, for child IAB node 10C and/or UE 20, there is a likelihood that IAB node 10B will fail in the reception of the DL signal from parent IAB node 10A.

Furthermore, if different configurations are prepared for a resource configuration for the MT of child IAB node 10C and a resource configuration for UE 20, there is a concern that processing in IAB node 10B will be complicated.

Accordingly, in the present embodiment, IAB node 10B is made to simply perform a resource configuration for child IAB node 10C. Furthermore, in the present embodiment, clarification of how child IAB node 10C uses a resource prevents an unintended operation in child IAB node 10C.

### <Outline>

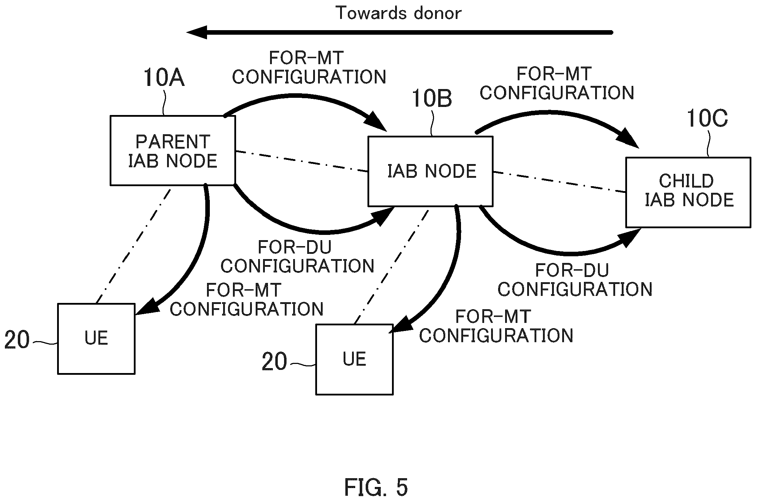

Next, an outline of the present embodiment will be described with reference to FIG. 5.

As illustrated in FIG. 5, parent IAB node 10A individually performs a for-MT configuration and a for-DU configuration on IAB node 10B. In the same manner, IAB node 10B individually performs the for-MT configuration and the for-BU configuration on child IAB node 10C. The same signaling (for example, a TDD-UL-DL-Config parameter) as for the for-UE configuration in Rel-15 or -16 may be used for the for-MT configuration.

Furthermore, in IAB node 10B, at least a portion of the for-MT configuration destined for child IAB node 10C and the for-MT configuration for UE 20 may be common. For example, the for-MT configuration destined for child IAB node 10C and the for-MT configuration for UE 20 may be common for a cell-specific configuration.

Furthermore, the for-DU configuration from IAB node 10B destined for child IAB node 10C may result from replacing (overwriting) at least a portion of the for-MT configuration destined for child IAB node 10C. Alternatively, the for-DU configuration from IAB node 10B destined for child IAB node 10C may be configured in such a manner as not to conflict with the for-MT configuration destine for child IAB node 10C.

That is, at least a portion of the for-MT configuration may be replaced (may be overwritten) according to the for-DU configuration. In this case, a result of replacing the for-MT configuration according to the for-DU configuration may be configured for the DU. For example, regarding a resource that, with the TDD-UL-DL-Config parameter of the for-MT configuration, is notified as DL or flexible, according to the for-DU configuration, IAB node 10B recognizes that a portion of the resource is available for child IAB node 10C and/ or UE 20. Furthermore, for example, regarding a resource that, with a search space configuration in the for-MT configuration, is notified as a Physical Downlink Control Channel (PDCCH) Monitoring occasion, according to the for-DU configuration, IAB node 10B recognizes that a portion of the resource is available for child IAB node 10C and/or UE 20. In these cases, on the resource, IAB node 10B may not receive the DL signal from parent IAB node 10A.

Alternatively, IAB node 10B may assume that, the for-MT configuration and the for-DU configuration, a conflict with at least a portion of the resource does not occur.

Next, as examples of the outline, example 1 to example 5 will be illustrated. It is noted that two or more of example 1 to example 5 may be combined.

### <Example 1: TDD Config>

Next, examples of the for-MT configuration and the for-DU configuration relating to a TDD Config parameter will be described.

As the for-MT configuration, a time resource is categorized as one of the DL, the UL, and the Flexible. The TDD-UL-DL-Config parameter is notified to IAB node 10.

As the for-DU configuration, one piece of information (DU resource information) of the following (A1) to (A7) on at least a portion of the time resource is notified to IAB node 10B. It is noted that the DU resource information may be referred to as a resource type.
(A1) DL-hard: IAB node 10B may use a resource on which DL-hard DU resource information is notified, for the DL dedicated to child IAB node 10C and/or UE 20, without depending on notification contents of the for-MT configuration. That is, IAB node 10B may assume that the resource on which the DL-hard DU resource information is notified is a resource that is not configured for the reception of the DL signal from parent IAB node 10A or the transmission of the UL signal to parent IAB node 10A.
(A2) DL-soft: IAB node 10B may separately switch a resource on which DL-soft DU resource information is notified, to any of DL-hard assumption and not-available assumption, according to an implicit or explicit instruction from parent IAB node 10A. The implicit or explicit instruction may be performed separately of higher layer signaling such as RRC signaling.
(A3) UL-hard: IAB node 10B may use a resource on which UL-hard DU resource information is notified, for the UL dedicated to child IAB node 10C and/or UE 20, without depending on the notification contents of the for-MT configuration. That is, IAB node 10B may assume that the resource on which UL-hard DU resource information is a resource that is not configured for the reception of the DL signal from parent IAB node 10A or the transmission of the UL signal to parent IAB node 10A.
(A4) UL-soft: IAB node 10B may switch a resource on which UL-soft DU resource information is notified, to any one of UL-hard assumption and the not-available assumption, according to an implicit or explicit instruction from parent IAB node 10A.
(A5) Flexible-hard: IAB node 10B may use a resource on which flexible-hard DU resource information is notified, for the DL or the UL dedicated to child IAB node 10C and/or UE 20, without depending on the notification contents of the for-MT configuration. That is, IAB node 10B may assume that a resource on which a flexible-hard parameter is notified is a resource that is not configured for the reception of the DL signal for parent IAB node 10A or the transmission of the UL signal to parent IAB node 10A.
(A6) Flexible-soft: IAB node 10B may separately switch a resource on which flexible-soft DU resource information notified, to any one of flexible-hard assumption and the not-available assumption, according to the implicit or explicit instruction from parent IAB node 10A.
(A7) Not-available: IAB node 10B may assume that a resource on which not-available DU resource information is notified is a resource that is not configured for the reception of the DL signal from parent IAB node 10A or the transmission of the UL signal to parent IAB node 10A, according to the notification contents of the for-MT configuration. That is, IAB node 10B does not use the resource on which the not-available DU resource information is notified, in a manner that is dedicated to child IAB node 10C and/or UE 20.

### <Example 2: Common Search Space (CSS) Configuration>

Next, examples of the for-MT configuration and the for-DU configuration relating to a CSS will be described.

IAB node 10B may configure a PDCCH-ConfigCommon parameter, as the for-MT configuration, from parent IAB node 10A.

In a case where the DU resource information on any one of (A1) to (A7), which are described above, is received, as the for-DU configuration, from parent IAB node 10A, IAB node 10B may assume at least one of the following (B 1) to (B2).
(B 1) In a case where a resource that is configured, as the for-MT configuration, for the PDCCH monitoring occasion in the CSS is configured, as the for-DU configuration, for any one of the DL-hard, the UL-hard, and the flexible-hard, IAB node 10B may not perform PDCCH monitoring in the PDCCH monitoring occasion in the corresponding CSS. Alternatively, in a case where the resource that is configured, as the for-MT configuration, for the PDCCH monitoring occasion in the CSS is configured, as the for-DU configuration, for any one of the DL-soft, the UL-soft, and the flexible-soft, and where assumption as each of the DL-hard, the UL-hard, and the flexible-hard is indicated implicitly or explicitly, IAB node 10B may not perform the PDCCH monitoring in the PDCCH monitoring occasion in the corresponding CSS.
(B2) IAB node 10B may not assume that at least a portion of the resource that is configured, as the for-MT configuration, for the PDCCH monitoring occasion is configured, as the for-DU configuration, for any one of the DL-hard, the UL-hard, and the flexible-hard. Alternatively, IAB node 10B may not assume that at least a portion of the resource that is configured, as the for-MT configuration, for the PDCCH monitoring occasion in the CSS is configured, as the for-DU configuration, for any one of the DL-soft, the UL-soft, and the flexible-soft, and that the assumption as each of the DL-hard, the UL-hard, and the flexible-hard is separately indicated implicitly or explicitly.

It is noted that a UE-specific search space configuration may be assumed in the same manner as the CSS search space configuration described above. Alternatively, at least a portion of the UE-specific search space configuration may be assumed differently than the CSS search space configuration described above. For example, one of (B1) and (B2) described above may be assumed for the CSS search space configuration, and the other of (B1) and (B2) described above may be assumed for the UE-specific search space configuration.

### <Example 3: Measurement Configuration>

Next, examples of the for-MT configuration and the for-DU configuration relating to a measurement configuration will be described.

IAB node 10B may configure a MeasObjectNR parameter, a RadioLinkMonitoringConfig parameter, and/or a BeamFailureRecoveryConfig parameter, as the for-MT configuration, from parent IAB node 10A.

In a case where the DU resource information on any one of (A1) to (A7), which are described above, is received, as the for-DU configuration, from parent IAB node 10A, IAB node 10B may assume at least one of (C1) to (C2) that will be described below.
(C1) In a case where a resource that is configured, as the for-MT configuration, for measurement, RLM, or BFD and/or BFR is configured, as the for-DU configuration, for any one of the DL-hard, the UL-hard, and the flexible-hard, IAB node 10B may not perform detection, a measurement operation, or a PRACH transmission operation for the BFR on the corresponding resource. Alternatively, in a case where the resource that is configured, as the for-MT configuration, for the measurement, the RLM, or the BFD and/or the BFR is configured, as the for-DU configuration, for any one of the DL-soft, the UL-soft, and the flexible-soft, IAB node 10B and where the assumption as each of the DL-hard, the UL-hard, and the flexible-hard is separately indicated explicitly or implicitly, IAB node 10B may not perform the detection, the measurement operation, or the PRACH transmission operation for the BFR on the corresponding resource. It is noted that the RLM is short for Radio Link Monitoring. The BFD is short for Beam Failure Detection. The BFR is short for Beam Failure Recovery. The PRACH is short for physical random access channel.
(C2) IAB node 10B may not be assumed that at least a portion of the resource that is configured, as the for-MT configuration, for the measurement, the RLM, or the BFD and/or the BFR is configured, as the for-DU configuration, for any one of the DL-hard, the UL-hard, and the flexible-hard. Alternatively, IAB node 10B may not assume that at least a portion of the resource that is configured, as the for-MT configuration, for the measurement, the RLM, or the BFD and/or BFR is configured, as the for-DU configuration, for any one of the DL-soft, the UL-soft, and the flexible-soft, and that the assumption as each of the DL-hard, the UL-hard, and the flexible-hard is separately indicated implicitly or explicitly.

It is noted that the assumption of the common (C1) or (C2), which is described above, may be applied for (a) dedication to Radio Resource Management (RRM) measurement, (b) dedication to the RLM, and (c) dedication to the BFD and/or BFR. Alternatively, different assumptions may be applied to at least one or several of the (a) to (c), respectively, which are described. For example, one of the (C1) and (C2) assumptions, which are described above, may be applied to one or two of the (a) to (c), which are described above, and the other of the (C1) and (C2) assumptions, which are described above, may be applied to the remaining one or two of the (a) to (c), which are described above.

### <Example 4: RACH Configuration>

Next, examples of the for-MT configuration and the for-DU configuration relating to a RACH configuration will be described. It is noted that the RACH is short for a Random Access Channel.

For IAB node 10B, a RACH-ConfigGeneric parameter may be configured, as the for-MT configuration, from parent IAB node 10A.

In the case where the DU resource information on any one of (A1) to (A7), which are described above, is received, as the for-DU configuration, from parent IAB node 10A, IAB node 10B may assume at least one of the following (D1) to (D2).
(D1) In a case where a resource that is configured, as the for-MT configuration, for the PRACH, configured, as the for-DU configuration, for any one of the DL-hard, the UL-hard, and the flexible-hard, IAB node 10B may not perform the PRACH transmission operation on the corresponding resource. Alternatively, in a case where the resource that is configured, as the for-MT configuration, for the PRACH is configured, as the for-DU configuration, for any one of the DL-hard, the UL-hard, and the flexible-hard, IAB node 10B and where the assumption as each of the DL-hard, the UL-hard, and the flexible-hard is separately indicated explicitly or implicitly, IAB node 10B may not perform the PRACH transmission operation on the corresponding resource.
(D2) IAB node 10B may not assume that at least a portion of the resource that is configured, as the for-MT configuration, for the PRACH is configured for any one of the DL-hard, the UL-hard, and the flexible-hard. Alternatively, IAB node 10B may not assume that at least a portion of the resource that is configured, as the for-MT configuration, for the PRACH is configured, as the for-DU configuration, for any one of the DL-soft, the UL-soft, and the flexible-soft, and that the assumption as each of the DL-hard, the UL-hard, and the flexible-hard is separately indicated implicitly or explicitly.

It is noted that the common (D1) or (D2), which is described, may be applied for dedication to a Contention-based RACH and dedication to a Contention-free RACH (including the dedication to the BFR). Alternatively, the assumptions that are partially different from each other may be applied for the dedication to the Contention-based RACH and the dedication to the Contention-free RACH (including the dedication to the BFR), respectively. For example, one of the (D1) and (D2) assumptions, which are described above, may be applied for the dedication to Contention-based RACH, and the other of the (D1) and (D2) assumptions, which are described above, may be applied for the dedication to the Contention-free RACH.

### <Example 5>

Regarding at least one or several of operations in the (A1) to the (A7), the (B1), the (B2), the (C1), the (C2), the (D1), and the (D2), which are described, IAB node 10B may change the assumption and/or the operation, based on a configuration relating to a transmission timing for IAB node 10B, which is indicated by parent IAB node 10A. Next, as examples of this, (E1) and (E2) are illustrated.
(E1) In a case where a UL transmission timing for parent IAB node 10A and a DL transmission timing for child IAB node 10C and/ or UE 20 are combined is indicated by parent IAB node 10A, although a resource is designated, as the for-MT configuration, for the UL or the Flexible is indicated, as the for-DU configuration, for the DL-hard or the DL-soft, IAB node 10B may operate in response to both of these indications. That is, IAB node 10B may transmit the DL signal destined for child IAB node 10C and/or UE 20, while transmitting the UL signal destined for parent IAB node 10A.
(E2) In a case where a DL reception timing from parent IAB node 10A and a UL reception timing for child IAB node 10C and/ or UE 20 are combined is indicated by parent IAB node 10A, or in a case where IAB node 10B applies the same operation even without this indication, IAB node 10B may operate in response to both of these indications although a resource that is indicated as the DL or the flexible as the for-MT configuration is indicated as the for-DU configuration for the DL-hard or the DL-soft. That is, IAB node 10B may receive the UL signal from child IAB node 10C and/or UE 20, while receiving the DL signal from parent IAB node 10A.

It is noted that, in a case where IAB node 10B applies the operation in the (E2) described above without the indication by the parent IAB node 10A, IAB node 10B may report to parent IAB node 10A that the operation in the (E2) described above is applied. Alternatively, in a case where IAB node 10B does not apply the operation in the (E2) described above without the indication by the parent IAB node 10A, IAB node 10B may report to parent IAB node 10A that the operation in the (E2) described above is not applied. Accordingly, parent IAB node 10A can know how IAB node 10B operates.

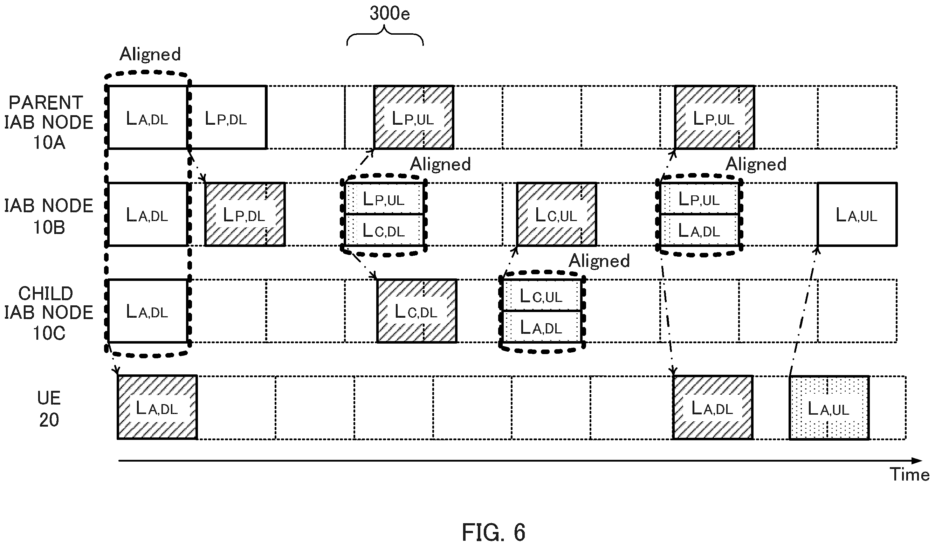

Next, an example of the (E1) described above will be described with reference to FIG. 6.

In a case where the case of the (E1) described above is indicated by parent IAB node 10A, IAB node 10B may transmit the L_{P, UL} signal to parent IAB node 10A and the L_{C}, _{DL} signal to child IAB node 10C in a manner that coincides with transmission timing 300e. In this case, the L_{P, UL} signal is received at a timing later than transmission timing 300e, but because the parent IAB node 10A recognizes that the L_{P, UL} signal is received late, there is no problem.

In a case where the case of the (E1) described above is indicated by parent IAB node 10A, IAB node 10B operates according to both of the for-MT configuration and the for-DU configuration. Because of this, it is possible that the transmission timing of the UL signal to parent IAB node 10A and the transmission timing of the DL signal to child IAB node 10C are combined.

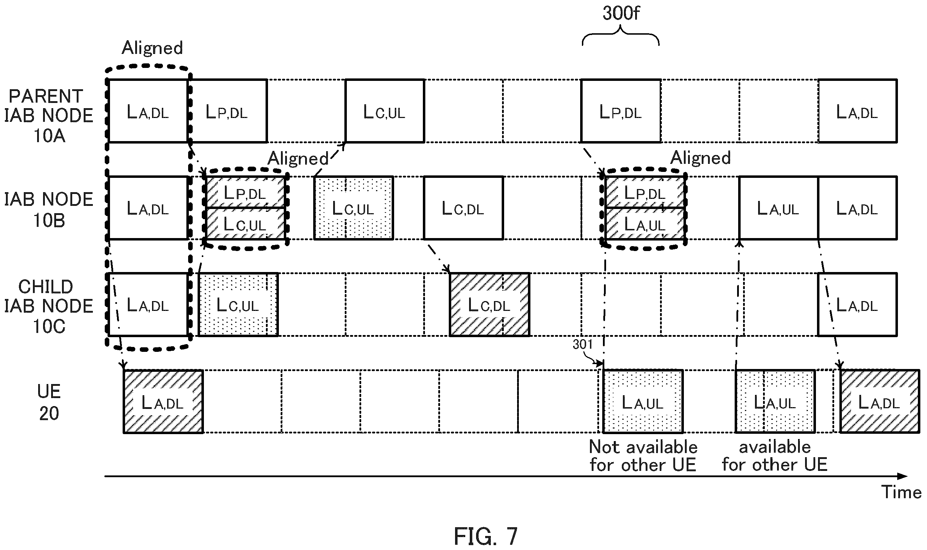

Next, an example of the (E2) described above will be described with reference to FIG. 7.

In a case where the case of the (E2) described above is indicated by parent IAB node 10A, IAB node 10B configures delay 301 in the transmission timing of the L_{A, UL} signal to UE 20, considering a delay in the reception timing of the L_{P, DL} signal from parent IAB node 10A with respect to transmission timing 300f. This configuration of delay 301 in the transmission timing may be unlimitedly performed by IAB node 10B. Accordingly, IAB node 10B can combine the reception timing of the L_{P, DL} signal from parent IAB node 10A and the reception timing of the L_{A, UL} signal from UE 20.

In a case where the case of the (E2) described above is indicated by parent IAB node 10A, IAB node 10B operates according to both of the for-MT configuration and the for-DU configuration. Because of this, it is possible that the reception timing of the DL signal from parent IAB node 10A and the reception timing of the UL signal from child IAB node 10C are combined.

It is noted that, in a case where the reception timing of the L_{P, DL} signal from parent IAB node 10A and the reception timing of the L_{A, UL} signal from UE 20 are combined, IAB node 10B may provide a configuration in which a resource is not available to a least one of any other pieces of UE at the transmission timing of the L_{A, UL} signal. Furthermore, in a case where the reception timing of the L_{P, DL} signal from parent IAB node 10A and the reception timing of the L_{A, UL} signal from UE 20 are not combined, IAB node 10B may provide a configuration in which a resource is available to a least one of any other pieces of UE at the transmission timing of the L_{A, UL} signal.

### <Modification Example>

In a specification, it is stipulated that a resource which is configured, as the for-MT configuration, for the Flexible may be unlimitedly used in the DU by IAB node 10B. That is, in the specification, it may be stipulated that the resource which is configured, as the for-MT configuration, for the Flexible may not be assumed for the reception of the DL signal and/or the transmission of the UL signal from or to parent IAB node 10A.

Alternatively, IAB node 10B may determine that the resource which is configured, as the for-MT configuration, for the Flexible, is "soft" and, according to the explicit and implicit instruction from parent IAB node 10A, may switch between the unlimited use and non-use of the resource.

Alternatively, in the specification, it may be stipulated that, of the resources that are configured, as the for-MT configuration, for the Flexible, the unlimited use of a resource that is configured for specific intended application is prohibited. The resource that is configured for the specific intended application may be the RRM measurement and/or the PDCCH monitoring occasion, or the like. Furthermore, it may be assumed that the resource of which the unlimited use is prohibited is a resource that is used for the reception of the DL signal or the transmission of the UL signal from or to parent IAB node 10 A.

It is noted that the granularity and/or pattern of the resource may be designated more flexibly for the for-DU configuration than for the for-MT configuration. For example, any one of pieces of DU resource information on only one or several symbols (resources), in the (A1) to the (A7) that are described, may be notified and no information may be notified to any other symbols.

Furthermore, in the (A1) to the (A6), which are described above, at least a portion of the for-MT configuration is replaced (overwritten) according to the for-DU configuration, but in the present embodiment, at least a portion of the for-DU configuration may be replaces (overwritten) according to the for-MT configuration. For example, the for-MT configuration described above can be replaced with the for-DU configuration described above and vice versa.

### <Wrap-up of the Present Disclosure>

A radio node in the present disclosure includes a reception section that receives first configuration information relating to a first radio backhaul link and second configuration information relating to at least one of a second radio backhaul link and a radio access link; and a control section that controls a first resource configuration for the first radio backhaul link and a second resource configuration for at least one of the second radio backhaul link and the radio access link, based on the first configuration information and the second configuration information.

At this point, the first radio backhaul link, for example, may be the DL and/or the UL between parent IAB node 10A and IAB node 10B. The second radio backhaul link, for example, may be the DL and/or the UL between IAB node 10B and child IAB node 10C. The radio access link, for example, may be the DL and/or the UL between IAB node 10B and UE 20. The first configuration information, for example, may be the for-MT configuration. The second configuration information may be the for-DU configuration. The first resource configuration, for example, may be a configuration in MT 102. The second resource configuration, for example, may be a configuration in DU 103.

In this manner, the first configuration information (the for-MT configuration) and the second configuration information (the for-DU configuration) are separated from each other, and thus a radio node (IAB node 10B) can suitably perform a configuration of a resource for a radio link to an upstream radio node (parent IAB node 10A) and a configuration of a resource for a radio link to a downstream radio node (child IAB node 10C) and/or UE 20.

Furthermore, the control section may control the second resource configuration based on information that results from replacing at least a portion of the first configuration information according to the second configuration information.

In this manner, at least a portion of the first configuration information is replaced according to the second configuration information and thus an amount of information of the second configuration information.

The present disclosure is described above.

### <Hardware Configuration and the like>

It is noted that the block diagram that is referred to for the description of the embodiment illustrates blocks on a per-function basis. These functional blocks (constituent sections) are realized by an arbitrary combination of at least pieces of hardware or pieces of software. Furthermore, a method of realizing each functional block is not particularly limited. That is, each functional block may be realized using one apparatus that results from physical or logical coupling, and may be realized by making a connection to two or more apparatuses that are separated physically or logically, in a direct or indirect manner (for example, such as a wire or radio) and using these multiple apparatuses. The functional block may be realized by combining the one or more apparatuses, which are described above, and a piece of software.

The functions include determining, deciding, judging, calculating, computing, processing, deriving, investigating, looking-up, ascertaining, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like, and are not limited to these. For example, a functional block (a constituent section) that causes a transmission function to be performed is referred to a transmission section (a transmitting unit) or a transmitter. Any one of the functional blocks is as described above, and a method of realizing a function block is not particularly limited.

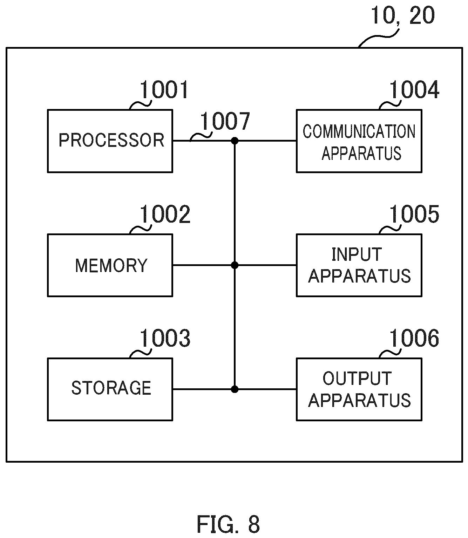

For example, a base station, a user terminal, and the like according to an embodiment in the present disclosure may function as a computer that performs processing for a radio communication method in the present disclosure. FIG. 8 is a diagram illustrating an example of a hardware configuration of an IAB node and a user terminal according to an embodiment in the present disclosure. IAB node 10 and user terminal 20, which are described above, may be physically configured as a computer apparatus that includes processor 1001, memory 1002, storage 1003, communication apparatus 1004, input apparatus 1005, output apparatus 1006, bus 1007, and the like.

It is noted that, in the following description, the term "apparatus" can be replaced with a circuit, a device, a unit, or the like. Hardware configurations of IAB nodes 10 and user terminal 20 may be employed in such a manner that one or more apparatuses that are illustrated are included, and may be configured without including one or several of the apparatuses.

A prescribed piece of software (a program) is read to be loaded onto a piece of hardware such as processor 1001, memory 1002, or the like, and thus processor 1001 performs an arithmetic operation, thereby controlling communication by communication apparatus 1004 or controlling at least one of reading and writing of data from and to memory 1002 and storage 1003. When this is done, a function of each of IAB node 10 and user terminal 20 is realized.

Processor 1001, for example, causes an operating system to operate and thus controls an entire computer. Processor 1001 may be configured with a central processing apparatus (a central processing unit (CPU)) that includes an interface with a peripheral apparatus, a control apparatus, an arithmetic operation apparatus, a register, and the like. For example, control section 100 described above and the like may be realized by processor 1001.

Furthermore, processor 1001 reads a program (a program code), a software module, data, and the like from at least one of storage 1003 and communication apparatus 1004 into memory 1002, and performs various processing operations according to these. As the program, a program is used that causes the computer to perform at least one or several of the operations in the embodiment described above. For example, control section 100 of IAB node 10 may be realized by a control program that is stored in memory 1002 and operates in processor 1001, and may also be realized in the same manner for any other functional block. The various processing operations described above are described as being performed by one processor 1001, but may be performed by two or more processors 1001 at the same time or sequentially. Processor 1001 may be integrated into one or more chips. It is noted that the program may be transmitted from a network via an electric telecommunication line.

Memory 1002 is a computer-readable recording medium, and, for example, may be configured with at least one of a Read Only Memory (ROM), an Erasable Programmable ROM (EPROM), an Electrically Erasable Programmable ROM (EEPROM), a Random Access Memory (RAM), and the like. Memory 1002 may be referred to a register, a cache, a main memory (a main storage apparatus), or the like. A program (a program code), a software module, or the like that is executable in order to perform the radio communication method according to the embodiment in the present disclosure can be retained in memory 1002.

Storage 1003 is a computer-readable recording medium, and, for example, may be configured with at least one of an optical disk such as a Compact Disc ROM (CD-ROM), a hard disk drive, a flexible disk, a magneto-optical disk (for example, a compact disk, a digital versatile disk, a Blu-ray (a registered trademark) disk), a smart card, a flash memory (for example, a card, a stick, or a key drive), a floppy (a registered trademark) disk, a magnetic strip, and the like. Storage 1003 may be referred to as an auxiliary storage apparatus. The storage medium described above, for example, may be a database or a server that includes at least one of memory 1002 and storage 1003, or any other suitable medium.

Communication apparatus 1004 is hardware (a transmission and reception device) for performing communication through at least one of a wired network and a radio network, and, for example, is also referred to as a network device, a network controller, a network card, a communication module, or the like. Communication apparatus 1004, for example, may be configured to include a high frequency switch, a duplexer, a filter, a frequency synthesizer, and the like in order to realize at least one of Frequency Division Duplex (FDD) and Time Division Duplex (TDD). For example, antennas or the like of the base station and the terminal may be realized by communication apparatus 1004. For mounting, a transmission and reception section may be separated physically and logically into a transmission section and a reception section.

Input apparatus 1005 is an input apparatus (for example, a keyboard, a mouse, a microphone, a switch, a button, a sensor, or the like) that receives input from the outside. Output apparatus 1006 is an output apparatus (for example, a display, a speaker, an LED lamp, or the like) that performs output to the outside. It is noted that input apparatus 1005 and output apparatus 1006 may be configured to be integrated into one piece (for example, a touch panel).

Furthermore, apparatuses, such as processor 1001, memory 1002, are connected to the bus 1007 for communicating information. The bus 1007 may be configured using a single bus and may be configured using a bus that differs from one apparatus to another.

Furthermore, each of IAB node 10 and user terminal 20 may be configured to include pieces of hardware, such as a microprocessor, a Digital Signal Processor (DSP), an Application Specific Integrated Circuit (ASIC), a Programmable Logic Device (PLD), and a Field Programmable Gate Array (FPGA). One or several of, or all of functional blocks of each of radio base station 10 and terminal 20 may be realized using the hardware. For example, processor 1001 may be integrated into at least one of these pieces of hardware.

### <Notification of Information and Signaling>

Information notification is not limited to the aspect and the embodiment, which are described in the present disclosure, and may be performed using any other method. For example, the information notification may be performed with Physical Layer Signaling (for example, Downlink Control Information (DCI), Uplink Control Information (UCI)), Higher Layer Signaling (for example, Radio Resource Control (RRC) Signaling, Medium Access Control (MAC) Signaling, report information (a Master Information Block (MIB)), a System Information Block (SIB)), any other signal, or a combination of these. Furthermore, the RRC signaling may be referred to as an RRC message, and, for example, may be an RRC Connection Setup Message, an RRC Connection Reconfiguration Message, or the like.

### <Application System>

Each of the aspects and embodiments, which are described in the present disclosure, may find application in at least one of Long Term Evolution (LTE), LTE-Advanced (LTE-A), SUPER 3G, IMT-Advanced, a 4th generation mobile communication system (4G), a 5th generation mobile communication system (5G), Future Radio Access (FRA), new Radio (NR), W-CDMA (a registered trademark), GSM (a registered trademark), CDMA 2000, Ultra Mobile Broadband (UMB), IEEE 802.11 (Wi-Fi (a registered trademark)), IEEE 802.16 (WiMAX (a registered trademark)), IEEE 802.20, Ultra-WideBand (UWB), Bluetooth (a registered trademark), any other system that uses a suitable system, and a next-generation system that results from the expansion which is based on these. Furthermore, application in a combination of multiple systems (for example, a combination of at least one of LTE and LTE-A and 5G, or the like) may be possible.

### <Processing Procedure and the like>

In a processing procedure, a sequence, a flowchart, and the like according to each of the aspects and the embodiment, which are described in the present disclosure, the order may be changed as long as there is no conflict. For example, various step elements of the method that is described in the present disclosure are presented in the exemplary order and is not limited to the presented specific order.

### Operation of the Base station

In some cases, a specific operation as performed by the base station in the present disclosure is performed by a higher node (an upper node) that is at a higher level than the base station, depending on the situation. It is apparent that, in a network that is made up of one or more network nodes each of which has a base station, various operations that are performed for communication with a terminal can be performed two by at least one of the base station and a network node (for example, an MME, an S-GW, or the like is considered, but no limitation to these is imposed) other than the base station. In the above description, the case where one network node other than the base station is provided is given as an example, but a combination of other multiple network nodes (for example, an MME and an S-GW) may be provided.

### <Input And Output Direction>

Information ( 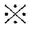 refer to the subtitle "Information And Signal") or the like can be output from a higher layer (or a lower layer) to the lower layer (or the higher layer). The information or the like may be input and output through multiple network nodes.

### <Handing the Information And the like that Are Input And Output>

The information and the like that are input and output may be retained in a specific place (for example, a memory) and may be managed using a management table. The information and the like that are input and output can be overwritten, updated, or added. The information and the like that are output may be deleted. The information and the like that are input may be transmitted to any other apparatus.

### <Judging Method>

Judging may be performed with a value (0 or 1) that is represented by one bit, may be performed with a Boolean value (true or false), and may be performed with comparison of numerical values (for example, comparison with a prescribed value).

### <Variation of the Aspect>

The aspects and the embodiments in the present disclosure may be used individually, may be used in combination and may be used in a switching manner depending on implementation. Furthermore, notification of prescribed information (for example, notification that "X is present") is not limited to being explicitly performed, and may be performed implicitly (for example, notification of the prescribed information is not performed).

The detailed description is provided above in the present disclosure, and it is apparent that the present disclosure is not limited to the embodiment that is described in the present disclosure. An amendment and an alteration to the present disclosure can be made without departing from the gist and scope of the present disclosure that is defined by claims. Therefore, the description in the present disclosure is for the purpose of providing an exemplary description and does not impose any limitation in meaning to the present disclosure.

### <Software>

Software is referred to as software, firmware, middleware, a microcode, or hardware description language, but, regardless of whether or not any other terms are available, can be broadly interpreted to mean a command, an instruction set, a code, a code segment, a program code, a program, a subprogram, a software module, an application, a software application, a software package, a routine, a subroutine, an object, an executable file, an execution file, a procedure, a function, or the like.

Furthermore, the software, the command, the information, and the like may be transmitted and received through a transfer medium. For example, in a case where the software is transmitted from a website, a server, or any other remote source using at least one of a cable technology (a coaxial cable, optical fiber, a twisted pair, a Digital Subscriber Line (DSL), or the like) and a radio technology, at least one of the cable technology and the radio technology (an infrared ray, a microwave, or the like) falls with the definition of the transfer medium.

### <Information and Signal>

The information and the signal, which are described in the present disclosure, and the like may be represented using any one of various different technologies. For example, data that can be referred to throughout the above description, an instruction, a command, information, a signal, a bit, a symbol, a chip, and the like may be represented by voltage, current, an electromagnetic wave, a magnetic field or a magnetic particle, a photo field or a photo, or an arbitrary combination of these.

It is noted that the terms which are described in the present disclosure and the terms which are necessary for an understanding of the present disclosure may be replaced with the terms that have the same or similar meaning. For example, at least one of a channel and a symbol may be a signal (signaling). Furthermore, the signal may be a message. Furthermore, a Component Carrier (CC) may be referred to as a carrier frequency, a cell, a frequency carrier, or the like.

### <"System" and "Network">

The terms "system" and "network" that are used in the present disclosure are interchangeably used.

### <Names of a Parameter And a Channel>

Furthermore, the information and the parameter, which are described in the present disclosure, and the like may be represented by an absolute value, may be represented using a relative value from a prescribed value, and may be represented using separate corresponding information. For example, a radio resource may be indicated by an index.

A name that is used for the parameter described above is also not a limited name in any respect. Moreover, in some cases, an equation or the like that use these parameters are different from those that are explicitly disclosed in the present disclosure. Various channels (for example, PUCCH, PDCCH, and the like) and information elements can be identified with all suitable names. Because of this, various names that are allocated to these various channels and information elements are not limited names in any respect.

### <Base Station>

In the present disclosure, the terms "base station (BS)", radio base station", "fixed station", "NodeB", "eNodeb (eNB)", "gNodeB (gNB)", "access point", "transmission point", "reception point", "transmission/reception point", "cell", "sector", "cell group", "carrier", and "component carrier", and the like can be interchangeably used. In some cases, the terms "macrocell", "small cell", and "femtocell" are used to refer to the base station.

The base station can accommodate one or more (for example, three) cells. In a case where the base station accommodates multiple cells, an entire coverage area that is covered by the base station can be divided into multiple smaller areas. In each of the smaller cells, a communication service can be provided by a base station subsystem (for example, indoors small-sized base station (Remote Radio Head (RRH))). The term "cell" or "sector" refers to one or several portions or all portions of a coverage area that is covered by at least one of a base station and a base station subsystem that perform the communication service in this coverage.

### <Mobile Station>

In the present disclosure, the terms "mobile station (MS)", "user terminal", "user equipment (UE)", and "terminal", and the like can be interchangeably used.

In some cases, a person of ordinary skill in the art refers to the mobile station as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, or a client, or using several other suitable terms.

### <Base Station/ Mobile Station>

At least one of the base station and the mobile station may be referred to as a transmission apparatus, a reception apparatus, a communication apparatus, or the like. It is noted that at least one of the base station and the mobile station may be a device that is mounted into a mobile body or the mobile body itself. The mobile body may be a vehicle (for example, an automobile or an airplane), may be an unmanned mobile body (for example, a drone, an autonomous vehicle, or the like), and may be a robot (a manned-type or unmanned-type robot). It is noted that at least one of the base station and the mobile station also includes an apparatus that does not necessarily move at the time of communication operation. For example, at least one of the base station and the mobile station may be Internet-of-Things (IoT) equipment such as a sensor.

Furthermore, the base station in the present disclosure may be replaced with the user terminal. For example, each of the aspects and the embodiment in the present disclosure may find application in a configuration that results from replaying communication between the base station and the user terminal with communication (which, for example, may be referred to as device-to-device (D2D), vehicle-to-everything (V2X), or the like) between each of the multiple user terminals. In this case, user terminal 20 may be configured to have the function that base station 10 described above has. Furthermore, the terms "uplink" and "downlink" may be replaced with the expression (for example, "side") that corresponds to inter-terminal communication. For example, an uplink channel, a downlink channel, and the like may be replaced with a side channel.

In the same manner, the user terminal in the present disclosure may be replaced with the base station. In this case, base station 10 is configured to have the function that user terminal 20 described above has.

### <Meaning And Interpretation of Terms>

In some cases, the meaning of the terms "determining" and "determining" are broadened to include various operations. Regarding "determining" and "deciding", for example, for example, a thing that is judged, calculated, computed, processed, derived, investigated, looked up (search or inquiry) (for example, as looked up in a table, a database, or a separate data structure), and ascertained can be inclusively considered as a thing that is determined or decided. Furthermore, regarding "determining" and "deciding", a thing that is received (for example, as information is received), transmitted (for example, as information is transmitted), input, output, or accessed (for example, as data in a memory is accessed) can be inclusively considered as a thing that is determined or "decided". Furthermore, regarding "determining" and "deciding", a thing that is resolved, selected, chosen, established, compared, or so on can be inclusively considered as a thing that is "determined" or "decided". More precisely, regarding "determining" and "deciding", a thing on which any operation is performed can be inclusively considered as a thing that is "determined" or "decided". Furthermore, "determining (deciding)" may be replaced with "assuming", "expecting", "considering", or the like.

The expressions "connected" and "coupled" or all variants of the expressions can mean all direct or indirect connection and coupling between two or more elements, and can imply the presence of one or more intermediate elements between two elements that are "connected" or "coupled" to each other. The connection and the coupling between elements may be made physically, may be made logically, or may be made both physically and logically. For example, "connection" may be replaced with "access". In the case of the use in the present disclosure, it is considered that two elements are "connected" or "coupled" to each other using at least one of one or more electric wires, a cable, and a printed electric connection, and an electromagnetic energy or the like that has a wavelength in a radio frequency domain, a microwave region, and a light (both visible light and invisible light) region, as several non-limiting and non-inclusive examples.

### <Reference Signal>

A reference signal can also be referred to as a Reference Signal (RS), and, according to standards that are applied, may be referred to a pilot.

### <Meaning of the expression "based on">

Unless otherwise specified, the expression "based on" that is used in the present disclosure does not mean "based only on". In other words, the description "based on" means both "based only on" and based at least on".

### <Terms "first" and "second">

Any reference to elements that use the terms "first" and "second" and the like that are used in the present disclosure does not generally limit a quantity of and the order of these elements. The terms can be used, as a method of distinguishing between two or more elements, in the present disclosure. Therefore, reference to first and second elements does not mean that only two elements are employed, or that the first element has to precede the second element in any form.

### <Means>

"Means" in a configuration of each of the apparatuses described above may be replaced with "section", "circuit", "device", or the like.

### <Open Format>

In the present disclosure, in a case where "include", "including", and variants of these are used, these terms are intended to have a broad meaning in the same manner as the term "comprising". Moreover, the term "or" that is used in the present disclosure is intended not to be exclusive OR.

### <Time Units such as a TTI, Frequency units such as an RB, and a Radio Frame Configuration>

The radio frame may be configured with one or more frames in a time domain. Each of the one or more frames in the time domain may be referred to as a subframe.

The subframe may be configured with one or more slots in the time domain. The subframe may be a fixed time length (for example, 1 ms) that does not depend on numerology.

The numerology may be a communication parameter that is applied to at least one of transmission and reception of a certain signal or channel. The numerology, for example, indicates at least one of Subcarrier Spacing (SCS), a bandwidth, a symbol length, a cyclic prefix length, Transmission Time Interval (TTI), the number of symbols per TTI, a radio frame configuration, specific filtering processing that is performed by a transmission and reception apparatus in a frequency domain, specific windowing processing that is performed by the transmission and reception apparatus in the time domain, and the like.

The slot is configured with one or more symbols (an Orthogonal Frequency Division Multiplexing (OFDM) symbol, a Single Carrier Frequency Division Multiple Access (SC-FDMA) symbol, or the like) in the time domain. The slot may be a time unit that is based on the numerology.

The slot may include multiple mini-slots. Each of the mini-slots may be configured with one or more symbols in the time domain. Furthermore, the mini-slot may be referred to as a subslot. The mini-slot may be configured with a smaller number of symbols than the slot. A PDSCH (or a PUSCH) that is transmitted in the time unit that is greater than the mini-slot may be referred to as a PDSCH (or a PUSCH) mapping type A. The PDSCH (or the PUSCH) that is transmitted using the mini-slot may be referred to as a PDSCH (or PUSCH) mapping type B.

Any one of the radio frame, the subframe, the slot, the mini-slot, and the symbol represents the time unit when transferring a signal. A separate name that corresponds to each of the radio frame, the subframe, the slot, the mini-slot, and the symbol may be used.

For example, one subframe may be referred to as a Transmission Time Interval (TTI), multiple contiguous subframes may be referred to as a TTI, and one slot or one mini-slot may be referred to as a TTI. More precisely, at least one of the subframe and the TTI may be a subframe (1 ms) in the existing LTE, may be a duration (for example, 1 to 13 symbols) that is shorter 1 ms, and may be a duration that is longer than 1 ms. It is noted that a unit that represents the TTI may be referred to a slot, a mini-slot, or the like instead of a subframe.

At this point, the TTI, for example, refers to a minimum time unit for scheduling in radio communication. For example, in an LTE system, the base station performs scheduling for allocating a radio resource (a frequency bandwidth, a transmit power, or the like that is used in each user terminal) in a TTI unit to each user terminal. It is noted that the definition of the TTI is not limited to this.

The TTI may be a transmission time unit, such as a data packet (a transport block) that is channel-coded, a code block, or a codeword, and may be a processing unit, such as scheduling or a link adaptation. It is noted that, when the TTI is assigned, a time section (for example, the number of symbols) to which the transport block, the code block, the codeword, or the like is actually mapped may be shorter than the TTI.

It is noted that, in a case where one slot or one mini-slot is referred to as the TTI, one or more TTIs (that is, one or more slots, or one or more mini-slots) may be a minimum time unit for the scheduling. Furthermore, the number of slots (the number of mini-slots) that makes up the minimum time unit for the scheduling may be controlled.

A TTI that has a time length of 1 ms may be referred to as a usual TTI (a TTI in LTE Rel.8-12), a normal TTI, a long TTI, a usual subframe, a normal subframe, a long subframe, a slot, or the like. A TTI that is shorter than the usual TTI may be referred to as a shortened TTI, a short TTI, a partial TTI (a fractional TTI), a shortened subframe, a short subframe, a mini-slot, a subslot, a slot, or the like.

It is noted that the long TTI (for example, the usual TTI, the subframe, or the like) may be replaced with the TTI that has a time length which exceeds 1 ms, and the short TTI (for example, the shortened TTI or the like) may be replaced with a TTI that has a TTI length which is less than a TTI length of the long TTI and is equal to or longer than 1 ms.

A resource block (RB) is a resource allocation unit in the time domain and the frequency domain, and may include one or more contiguous subcarriers in the frequency domain. The number of subcarriers that are included in the RB may be the same regardless of the numerology, and, for example, may be 12. The number of subcarriers that are included in the RB may be determined based on the numerology.

Furthermore, the time domain of the RB may include one or more symbols and may have a length of one slot, one mini-slot, one subframe, or one TTI. One TTI, one subframe, and the like each may be configured with one or more resource blocks.

It is noted that one or more RBs may be referred to as a Physical Resource Block (PRB), a Sub-carrier Group (SCG), a Resource Element Group (REG), a PRB pair, an RB pair, or the like.

Furthermore, the resource block may be configured with one or more Resource Elements (REs). For example, one RE may be a radio resource region that is one subcarrier and one symbol.

A bandwidth part (BWP) (which may be referred to as a partial bandwidth or the like) may represent a subset of contiguous common resource blocks (RB) for certain numerology in a certain carrier. At this point, the common RB may be specified with an RB index that uses a common reference point of the carrier as a reference. The PRBs may be defined with a certain BWP and may be numbered within the BWP. A UL BWP and a DL BWP may be included in the BWP. For the UE, one or more BWPs may be configured to be within one carrier.

At least one of the BWPs that are configured may be active, and it may not be assumed that the UE transmits and receives a prescribed signal or channel outside of the BWP that is active. It is noted that, in the present disclosure, "cell", "carrier", and the like may be replaced with "BWP".

Structures of the radio frame, the subframe, the slot, the mini-slot, the symbol, and the like are only described as examples. For example, the number of subframes that are included in the radio frame, the number of slots per subframe or radio frame, the number of mini-slots that are included within the slot, the numbers of symbols and RBs that are included in the slot or the mini-slot, the number of subcarriers that are included in the RB, the number of symbols within the TTI, the symbol length, the Cyclic Prefix (CP) length, and the like can be configured to be variously changed.

### <Maximum Transmit Power>

The "maximum transmit power" described in the present disclosure may mean a maximum value of the transmit power, may mean the nominal UE maximum transmit power, and may mean the rated UE maximum transmit power.

### <Article>

In the present disclosure, for example, in a case where articles, such as a, an and the in English, are added during translation, a noun that follows these articles may have the same meaning as when used in the plural.

### <"Different">

In the present disclosure, the expression "A and B are different" may mean that "A and B are different from each other". It is noted that the expression may mean that "A and B are different from C". The expressions "separated" and "coupled" may also be interpreted in the same manner as the expression "A and B are different".

### Industrial Applicability

An aspect of the present disclosure is useful for a radio communication system.

### Reference Signs List

0, 10A, 10B, 10C IAB node
20 UE
100 Control section
102 Mobile-Termination (MT)
103 Distributed Unit (DU)

## Claims

1. A radio node (10), comprising:
a Mobile-Termination, MT, (102);
a Distributed Unit, DU, (103);
a communication section (1004) configured to receive configuration information for the DU (103) and configuration information for the MT, (102); and
a control section (100) configured to configure a slot format in the DU (103) based on the configuration information for the DU (103) and to configure a slot format in the MT (102) based on the configuration information for the MT (102);
wherein same signaling as for a configuration information for a terminal (20) is used for the configuration information for the MT (102) and same parameter as in the configuration information for the terminal (20) is included in the configuration information for the MT (102), and
the radio node (10) is an Integrated Access and Backhaul, IAB, node.

2. The radio node (10) according to claim 1, wherein
the control section (100) is configured to communicate with a first IAB node based on the slot format in the DU (103) and communicate with a second IAB node based on the slot format in the MT (102).

3. The radio node (10) according to claim 1, wherein
the configuration information for the MT (102) and a configuration information for a terminal (20) is common for a cell-specific configuration.

4. The radio node (10) according to claim 1, wherein
the configuration information for the DU includes:
a first configuration in which communication is performed in a symbol based on a slot format in the DU (103);
a second configuration in which communication is performed in the symbol based on the slot format in the DU (103) in a case where no communication is performed in a symbol based on a slot format in the MT (102); and
a third configuration in which no communication is performed in the symbol based on the slot format in the DU (103), wherein
the first configuration, the second configuration, and the third configuration are configured based on resource information for the DU (103).

5. A radio communication method, comprising:
receiving, by a radio node (10), configuration information for a Distributed Unit, DU, (103) and configuration information for a Mobile-Termination, MT, (102); and
configuring, by the radio node (10), a slot format in the DU (103) based on the configuration information for the DU (103), and configuring, by the radio node (10), a slot format in the MT (102) based on the configuration information for the MT (102);
wherein same signaling as for a configuration information for a terminal (20) is used for the configuration information for the MT (102) and same parameter as in the configuration information for the terminal (20) is included in the configuration information for the MT (102), and
the radio node (10) is an Integrated Access and Backhaul, IAB, node.

## Patentansprüche

1. Funkknoten (10), umfassend:
einen Mobil-Abschluss, MT, (102);
eine verteilte Einheit, DU, (103);
einen Kommunikationsabschnitt (1004), der so konfiguriert ist, dass er eine Konfigurationsinformation für die DU (103) und eine Konfigurationsinformation für den MT (102) empfängt; und
einen Steuerabschnitt (100), der so konfiguriert ist, dass er ein Schlitzformat in der DU (103) auf der Grundlage der Konfigurationsinformation für die DU (103) konfiguriert und dass er ein Schlitzformat in dem MT (102) auf der Grundlage der Konfigurationsinformation für den MT (102) konfiguriert;
wobei die gleiche Signalisierung wie für eine Konfigurationsinformation für ein Endgerät (20) für die Konfigurationsinformation für den MT (102) verwendet wird und der gleiche Parameter wie in der Konfigurationsinformation für das Endgerät (20) in der Konfigurationsinformation für den MT (102) eingeschlossen ist, und
der Funkknoten (10) ein integrierter Zugangs- und Backhaul-, IAB, Knoten ist.

2. Funkknoten (10) nach Anspruch 1, wobei
der Steuerabschnitt (100) so konfiguriert ist, dass er mit einem ersten IAB-Knoten auf der Grundlage des Schlitzformats in der DU (103) kommuniziert und mit einem zweiten IAB-Knoten auf der Grundlage des Schlitzformats in dem MT (102) kommuniziert.

3. Funkknoten (10) nach Anspruch 1, wobei
die Konfigurationsinformation für den MT (102) und eine Konfigurationsinformation für ein Endgerät (20) für eine zellenspezifische Konfiguration gemeinsam sind.

4. Funkknoten (10) nach Anspruch 1, wobei
die Konfigurationsinformation für die DU einschließt:
eine erste Konfiguration, in der die Kommunikation in einem Symbol auf der Grundlage eines Schlitzformats in der DU (103) durchgeführt wird;
eine zweite Konfiguration, in der die Kommunikation in dem Symbol auf der Grundlage des Schlitzformats in der DU (103) in einem Fall durchgeführt wird, in dem keine Kommunikation in einem Symbol auf der Grundlage eines Schlitzformats in dem MT (102) durchgeführt wird; und
eine dritte Konfiguration, in der keine Kommunikation in dem Symbol auf der Grundlage des Schlitzformats in der DU (103) durchgeführt wird, wobei
die erste Konfiguration, die zweite Konfiguration und die dritte Konfiguration auf der Grundlage von einer Ressourceninformation für die DU (103) konfiguriert werden.

5. Funkkommunikationsverfahren, umfassend:
Empfangen, durch einen Funkknoten (10), von einer Konfigurationsinformation für eine verteilte Einheit, DU, (103) und von einer Konfigurationsinformation für einen Mobil-Abschluss, MT, (102); und
Konfigurieren, durch den Funkknoten (10), eines Schlitzformats in der DU (103) auf der Grundlage der Konfigurationsinformation für die DU (103), und Konfigurieren, durch den Funkknoten (10), eines Schlitzformats in dem MT (102) auf der Grundlage der Konfigurationsinformation für den MT (102);
wobei die gleiche Signalisierung wie für eine Konfigurationsinformation für ein Endgerät (20) für die Konfigurationsinformation für den MT (102) verwendet wird und der gleiche Parameter wie in der Konfigurationsinformation für das Endgerät (20) in der Konfigurationsinformation für den MT (102) eingeschlossen ist, und
der Funkknoten (10) ein integrierter Zugangs- und Backhaul-, IAB, Knoten ist.

## Revendications

1. Noeud sans fil (10), comprenant :
une terminaison mobile, MT, (102) ;
une unité distribuée, DU, (103) ;
une section de communication (1004) configurée pour recevoir des informations de configuration pour la DU (103) et des informations de configuration pour la MT, (102) ; et
une section de contrôle (100) configurée pour configurer un format de fente dans la DU (103) sur la base des informations de configuration pour la DU (103) et pour configurer un format de fente dans la MT (102) sur la base des informations de configuration pour la MT (102) ;
dans lequel une même signalisation que pour une information de configuration pour un terminal (20) est utilisée pour les informations de configuration pour la MT (102) et le même paramètre que les informations de configuration pour le terminal (20) est inclus dans les informations de configuration pour la MT (102), et
le noeud sans fil (10) est un noeud IAB, Integrated Access and Backhaul.

2. Noeud sans fil (10) selon la revendication 1, dans lequel
la section de contrôle (100) est configurée pour communiquer avec un premier noeud IAB sur la base du format de fente dans la DU (103) et communiquer avec un deuxième noeud IAB sur la base du format de fente dans la MT (102).

3. Noeud sans fil (10) selon la revendication 1, dans lequel
les informations de configuration pour la MT (102) et une information de configuration pour un terminal (20) sont communes pour une configuration spécifique à la cellule.

4. Noeud sans fil (10) selon la revendication 1, dans lequel
les informations de configuration pour la DU incluent :
une première configuration dans laquelle une communication est réalisée en un symbole sur la base d'un format de fente dans la DU (103) ;
une deuxième configuration dans laquelle une communication est réalisée en le symbole sur la base du format de fente dans la DU (103) dans un cas où aucune communication n'est réalisée en un symbole sur la base d'un format de fente dans la MT (102) ; et
une troisième configuration dans laquelle aucune communication n'est réalisée en le symbole sur la base du format de fente dans la DU (103), dans lequel
la première configuration, la deuxième configuration, et la troisième configuration sont configurées sur la base d'informations de ressource pour la DU (103).

5. Procédé de communication radio, comprenant :
la réception, par un noeud sans fil (10), d'informations de configuration pour une unité distribuée, DU, (103) et d'informations de configuration pour une terminaison mobile, MT, (102) ; et
la configuration, par le noeud sans fil (10), d'un format de fente dans la DU (103) sur la base des informations de configuration pour la DU (103), et la configuration, par le noeud sans fil (10), d'un format de fente dans la MT (102) sur la base des informations de configuration pour la MT (102) ;
dans lequel une même signalisation que pour une information de configuration pour un terminal (20) est utilisée pour les informations de configuration pour la MT (102) et le même paramètre que les informations de configuration pour le terminal (20) est inclus dans les informations de configuration pour la MT (102), et
le noeud sans fil (10) est un noeud IAB, Integrated Access and Backhaul.
